# EUROPEAN PATENT SPECIFICATION

(11) **EP 4 029 844 B1**
(45) Date of publication and mention of the grant of the patent: **09.08.2023**
(21) Application number: 19954403.2
(22) Date of filing: 20.12.2019
(51) Int. Cl.: C04B 26/02, C04B 28/02, C04B 28/04, C04B 28/06, C04B 40/06, C04B 18/02

(54) **RE-DISSOLVABLE MORTAR CONSOLIDATION, PREPARATION METHOD THEREFOR, MORTAR PRODUCT, AND APPLICATIONS**
WIEDERAUFLÖSBARE MÖRTELVERFESTIGUNG, VERFAHREN ZU IHRER HERSTELLUNG, MÖRTELPRODUKT UND ANWENDUNGEN
CONSOLIDATION DE MORTIER RE-SOLUBLE, PROCÉDÉ DE PRÉPARATION, PRODUIT DE MORTIER ET APPLICATIONS ASSOCIÉS

(30) Priority: 29.11.2019 CN 201911207056
(43) Date of publication of application: 20.07.2022
(73) Proprietor: China Institute of Building Standard Design & Research, Beijing 100048 (CN)
(72) Inventor: CHI, Bichuan, Beijing 100048 (CN); LUO, Wenbin, Beijing 100048 (CN); GAO, Peng, Beijing 100048 (CN); WANG, Xinping, Beijing 100048 (CN); LI, Juan, Beijing 100048 (CN); ZHENG, Yang, Beijing 100048 (CN); WANG, Jiachen, Beijing 100048 (CN); CHEN, Boru, Beijing 100048 (CN)
(74) Representative: Kilner, Matthew Simon
(86) International application number: PCT/CN2019/126962
(87) International publication number: WO 2021/103222

(56) References cited:
- WO-A1-2004/063116
- CN-A- 1 430 588
- CN-A- 1 524 821
- CN-A- 1 594 172
- CN-A- 108 473 375
- JP-A- H0 680 458
- JP-A- H0 840 760
- JP-A- H1 045 456
- JP-A- S6 490 313

## Description

### FIELD

The present disclosure relates to the technical field of construction mortar, and in particular to a re-dissolvable mortar consolidation, and a preparation method, a variety of mortar products and methods of using thereof.

### BACKGROUND

Dry mix mortar is one of the construction engineering materials used with the largest amount. However, the dry powder product pattern causes two major problems in the application of dry mix mortar: the first problem is the generation of serious fugitive dust pollution when the dry mix mortar is blended with water at construction sites; the second problem is the components are prone to separate, the distribution is uneven, and the product quality is unstable, resulting from the discrete product pattern and large density difference of raw materials.

An existing solution (see e.g. CN1524821 A) for solving the above problems is to prepare the hot-melt molding mortar, which relates to mixing of a powder having a hot-melt binding agent into a dry mix mortar raw material, melting the hot-melt binding agent by heating and then solidifying the binding agent by cooling, whereby the components of dry powders containing the binding agent are consolidated into a whole. The same construction work as conventional mortars is performed by forming the mortar with a sheet shape by pressing, and after the mortar with a sheet shape is transported to the construction site, it is sprayed with water and dissolved into a wet slurry state. This scheme effectively solves the problems of fugitive dust pollution and instable quality by modifying the morphology of the mortar product (from powder to sheet).

However, the above-mentioned technical solution has key defects in the following aspects:
(1) The preparation cost is high. During the hot-melt molding process, the introduction of high added amount (the volume fraction is typically greater than 10%) of water-soluble binding agent is required, otherwise the water-soluble binding agent in the molten state cannot sufficiently infiltrate the mortar materials, and does not provide sufficient cohesive strength, resulting in easy breakage of the mortar body after the molding process. The high added amount of water-soluble binding agent would make the mortar cost to multiply thereby losing application value economically.
(2) The dissolution rate is low. During the hot-melt molding process, the high added amount of viscous water-soluble binding agent form relatively thick "gel films" between particles of the mortar materials, the dissolution time is relatively long after mixing with water, resulting in a low efficiency of the construction operation.
(3) The mortar workability is poor. When the hot-melt molding process is used, it is generally necessary to introduce high added amount of porous light aggregates as an interlocking connector between the water-soluble binding agent and the rest of the mortar materials, otherwise the molded mortar body has the disadvantages of poor hardness, being brittle and easily peeled off. However, the high added amount of light aggregates causes that the fluidity and cohesiveness of the dissolved mortar slurry are significantly reduced, resulting in poor workability, which not only affects the construction efficiency, but also leads to poor adhesive effect and low bonding strength between the mortar and the working surface.
(4) The hardened mortar has poor physical and mechanical properties. The high added amount of light aggregates result in that the mortar mixture formed by adding water and dissolving has a low mechanical strength after a re-hardening process.

### SUMMARY

The purpose of the present disclosure is to overcome the above-mentioned defects of the hot-melt mortar in the prior art, and provides a re-dissolvable mortar consolidation, and a preparation method, mortar products and uses thereof. The re-dissolvable mortar consolidation is characterized by a small dissolution time limit, desirable workability fluidity and high strength.

In order to fulfill the present disclosure purposes, a first aspect of the present disclosure provides a re-dissolvable mortar consolidation comprising: a hydraulic inorganic cementitious material, an aggregate, a soluble binding agent, and at least one optional additional component selected from the group consisting of an admixture, an additive and a fiber; the soluble binding agent binds the hydraulic inorganic cementitious material, the aggregate and the additional component into a whole; wherein the content of the soluble binding agent in the mortar consolidation is greater than 0 wt% and no greater than 1.5 wt%, based on the total weight of the mortar consolidation; the soluble binding agent is water-soluble and is soluble in at least one organic solvent selected from the group consisting of ketones, alcohols, amines, amides, aliphatic hydrocarbon, aromatic hydrocarbon, halogenated hydrocarbon, nitriles, ethers, aldehydes, sulfones, phenols and esters.

A second aspect of the present disclosure provides a method of preparing a re-dissolvable mortar consolidation, comprising the following steps:
(1) blending a dry powder with an organic solvent to obtain a mixture; and
(2) subjecting the mixture to a removal of the organic solvent and a molding process to prepare the mortar consolidation;
   wherein the dry powder comprises a hydraulic inorganic cementitious material, an aggregate, a soluble binding agent, and at least one optional additional component selected from the group consisting of an admixture, an additive and a fiber; the soluble binding agent is dissolved in the organic solvent and binds the hydraulic inorganic cementitious material, the aggregate and the additional component into a whole;
   the content of the soluble binding agent in the dry powder is greater than 0 wt% and no greater than 1.5 wt%, based on the total weight of the dry powder; the soluble binding agent is water-soluble; the organic solvent is at least one selected from the group consisting of ketones, alcohols, amines, amides, aliphatic hydrocarbon, aromatic hydrocarbon, halogenated hydrocarbon, nitriles, ethers, aldehydes, sulfones, phenols and esters.

A re-dissolvable mortar consolidation prepared with the method of the present disclosure is described.

A third aspect of the present disclosure provides a mortar sheet comprising a support and a re-dissolvable mortar consolidation of the present disclosure packaging the support, wherein the support is at least one of a glass fiber mesh, a plastic mesh and a metal mesh.

A fourth aspect of the present disclosure provides a method of using a mortar sheet of the present disclosure, comprising the following steps: adhering a re-dissolvable mortar consolidation on one side of a mortar sheet after spraying water and a wetting process to a working surface; subjecting the re-dissolvable mortar consolidation on the other side of the mortar sheet to spraying water and completely dissolving; pasting other material on a surface of the dissolved mortar consolidation, and subjected to hardening and cementing; wherein the other material is at least one selected from the group consisting of mortar, building block, brick, ceramic tile, dimension stone, slab, wallpaper, coating, a thermal insulation material or a waterproofing material.

A fifth aspect of the present disclosure provides a mortar building material comprising a base material, and a re-dissolvable mortar consolidation of the present disclosure bonding with the base material, wherein the base material is at least one of building block, brick, ceramic tile, dimension stone, slab, wallpaper, coating film, a thermal insulation material or a waterproofing material.

A sixth aspect of the present disclosure provides a method of using a mortar building material of the present disclosure, comprising: spraying water and dissolving a re-dissolvable mortar consolidation contained in the mortar building material, and then directly adhering the mortar building material to a working surface and subjecting to a hardening process.

A seventh aspect of the present disclosure provides a mortar particle granulated from the re-dissolvable mortar consolidation of the present disclosure, wherein the mortar particle has a shape of sphere, ellipsoid, cube, cylinder or cone, and the maximum geometrical diameter of the mortar particle is within a range of 1-100mm.

An eighth aspect of the present disclosure provides a method of using mortar particles of the present disclosure, comprising the following steps: dissolving the mortar particles in water to form a slurry, daubing the slurry on a working surface, hardening directly or after cementing with other materials.

Due to the aforementioned technical solutions, the present disclosure provides a re-dissolvable mortar consolidation, which can be dissolved into a wet mortar slurry having a tacky and adhesive function by adding water during the construction operation, and subsequently enabling the mortar slurry to be hardened and cemented by using a conventional construction method.

The present disclosure provides a method for preparing a re-dissolvable mortar consolidation using the solvent molding process, the re-dissolvable mortar consolidation has a much lower manufacturing cost because of its better wetting property and small added amount of soluble binding agent. In addition, the "gel film" packaging the mortar raw materials is thin, the mortar consolidation after mixing with water has a faster destruction rate, a higher dissolution rate and a shorter dissolution time period, such that the construction efficiency can be greatly improved. Moreover, the mortar consolidation provided by the present disclosure does not comprise a light aggregate, the slurry formed from the mortar consolidation after adding water and dissolution has a much better fluidity and cohesiveness, a more desirable workability thereby producing a more reliable adhesion effect with the working surface. Moreover, the hardened mortar exhibits better mechanical strength.

The mortar consolidation provided by the present disclosure can be prefabricated into a plurality of mortar products according to the requirements of application scenarios, such as the products with a shape of sheet, bar, block, granule or other irregular morphology, and can be pre-compounded into an integrated product with building blocks, ceramic tiles, slabs, thermal insulation materials and waterproofing materials. After the mortar products are transported to the construction site, the mortar consolidation contained therein is sprayed with water, the mortar consolidation is dissolved into wet mortar, and the workers can directly implement the operations of cementing, masonry, paving, etc. Thus, the mixing and plastering processes in the conventional construction of mortar are eliminated. Therefore, the mortar consolidation provided by the present disclosure can be applied without the steps of adding the dry powder with water and blending the mixture, and can completely eradicate the occurrence of fugitive dust pollution. Meanwhile, the product form of the consolidation can avoid the separation phenomenon of the components of raw materials, the uniformity of the components and the stability of the product quality are greatly improved. Furthermore, the pre-fabricated and standardized specification and dimensions can effectively eliminate the quality problems occurred in the conventional manual mortar application process, such as insufficient daubing, omission of daubing, uneven thickness of mortar, such that the construction quality can be significantly improved. The mortar consolidation provided by the present disclosure can also be flexibly cut on the spot according to the requirements in use, and has little residual construction waste, and the construction operation is extremely clean and environmentally friendly.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

In the present disclosure, the term "solvent molding" means a molding process in which a soluble binding agent is dissolved by adding an organic solvent, the components in the mortar are cemented by means of the soluble binding agent, the components are consolidated into a whole while subsequently removing the organic solvent.

The term "soluble binding agent" refers to a binding agent that is soluble in liquid water, particularly water at 5°C to 40°C, and is soluble in a selected organic solvent.

In a first aspect, the present disclosure provides a re-dissolvable mortar consolidation comprising: a hydraulic inorganic cementitious material, an aggregate, a soluble binding agent, and at least one optional additional component selected from the group consisting of an admixture, an additive and a fiber; the soluble binding agent binds the hydraulic inorganic cementitious material, the aggregate and the additional component into a whole;
wherein the content of the soluble binding agent in the mortar consolidation is greater than 0 wt% and no greater than 1.5 wt%, based on the total weight of the mortar consolidation; the soluble binding agent is water-soluble and is soluble in at least one organic solvent selected from the group consisting of ketones, alcohols, amines, amides, aliphatic hydrocarbon, aromatic hydrocarbon, halogenated hydrocarbon, nitriles, ethers, aldehydes, sulfones, phenols and esters.

The re-dissolvable mortar consolidation provided by the present disclosure is capable of binding the components of mortar consolidation into a whole by using the solubility of a soluble binding agent and an organic solvent; the consolidation subsequently contacts with water, the soluble binding agent is again dissolved in water, and the hydraulic inorganic cementitious material contained in the consolidation carries out reaction upon contacting with water, the consolidation is transformed into a wet mortar, which can be used for conventional construction process with mortar.

In some embodiments of the present disclosure, it is preferable that the mortar consolidation comprises: the hydraulic inorganic cementitious material in an amount of 10-70 wt%, the aggregate in an amount of 15-88 wt%, the soluble binding agent in an amount of 0.2-1.5 wt%, the admixture in an amount of 0-40 wt%, the additive in an amount of 0-10 wt% and the fiber in an amount of 0-6 wt%, based on the total weight of the mortar consolidation. More preferably, the mortar consolidation comprises: the hydraulic inorganic cementitious material in an amount of 15-45 wt%, the aggregate in an amount of 45-75 wt%, the soluble binding agent in an amount of 0.4-1.2 wt%, the admixture in an amount of 5-30 wt%, the additive in an amount of 0.2-6 wt% and the fiber in an amount of 0-3 wt%, based on the total weight of the mortar consolidation. In the present disclosure, the mortar consolidation is formed by binding the other components through a cross-linked network formed when the soluble binding agent is dissolved in an organic solvent. After contacting with water, the mortar consolidation can be re-dissolved to form a wet slurry having the same cementitious function as a conventional mortar.

In some embodiments of the present disclosure it is preferred that the soluble binding agent is at least one selected from the group consisting of xanthan gum, acetate starch, starch ether and synthetic water-soluble polymer; and further preferably synthetic water-soluble polymer. In particular, the starch ether is at least one selected from the group consisting of hydroxymethyl starch, hydroxyethyl starch and hydroxypropyl starch; the synthetic water-soluble polymer is one or more selected from the group consisting of polyvinyl alcohol, polyethylene glycol, polyacrylamide, polyvinylformamide, polymaleic anhydride, polyethylene oxide, polyvinylpyrrolidone, polyacrylic acid (polyacrylate), polymethacrylic acid (polymethacrylate), polydimethyldiallyl ammonium chloride, polyvinyl alcohol-based copolymers, polyethylene glycol-based copolymers, acrylamide-based copolymers, vinyl formamide copolymers, maleic anhydride-based copolymers, N-vinylpyrrolidone-based copolymers, acrylic acid (acrylate)-based copolymers, methacrylic acid (methacrylate)-based copolymers and dimethyldiallylammonium chloride-based copolymers. Preferably, the synthetic water-soluble polymer has an average molecular weight within a range of 4,000 g/mol to 400,000 g/mol, and is preferably polyvinyl alcohol, polyethylene glycol, polyacrylamide, polyvinylformamide, polymaleic anhydride, polyethylene oxide, polyvinylpyrrolidone, polyacrylic acid (polyacrylate), polymethacrylic acid (polymethacrylate), polydimethyldiallyl ammonium chloride. The soluble binding agent is soluble in the organic solvent, and the formed organic solution wets the other components of the mortar consolidation, the organic solvent can be removed by drying, the soluble binding agent may fixedly bind the other components into a whole. Upon exposure to water, the network structure formed by the soluble binding agent disintegrates, such that the mortar consolidation dissolves to form a wet slurry. In the present disclosure, an excessive low content of the soluble binding agent causes that the mortar consolidation can hardly be formed, or the formed mortar consolidation has low hardness and is prone to crush; and an excessive high content of the soluble binding agent causes the formed mortar consolidation dissolves slowly after contacting with water, thereby reducing the construction efficiency. For example, polyacrylic acid (polyacrylate) represents the polyacrylic acid or the polyacrylate, and the other compounds are denoted in the same manner.

According to some embodiments of the present disclosure, it is preferable that the organic solvent is at least one selected from the group consisting of acetone, butanone, pentanone, cyclohexanone, methyl cyclohexanone, 3-methyl-2-butanone, 2-pyrrolidone, N-methyl pyrrolidone, N-vinyl pyrrolidone, methanol, ethanol, propanol, isopropanol, butanol, isobutanol, tert-butanol, pentanol, cyclohexanol, methyl cyclohexanol, ethylene glycol, propylene glycol, glycerol, butanediol, diethylene glycol, diacetone alcohol, diethylene glycol, triethylene glycol, 1,6-hexanediol, poly(ethylene glycol)-400 (PEG-400), 2,2'-thiodiethanol, 2-amino-2-methyl propanol, dimethyl acetal, butylamine, isobutylamine, 2-butylamine, t-butylamine, cyclohexylamine, aniline, ethylene diamine, ethanolamine, diethanolamine, triethanolamine, aminoethylethanolamine, pyridine, formamide, N-methyl formamide, N,N-dimethyl formamide, N-diethyl formamide, diethylenetriamine, triethylenetetramine, tetraethylenepentamine, dimethyl sulfoxide, pentane, hexane, nitromethane, nitroethane, methylhydrazine, acetonitrile, methylene chloride, chloroform, carbon tetrachloride, dichloroethane, trichloroethane, chloropropane, chlorobutane, 1-chloro-2-methylpropane, 2-chloro-2-methylpropane, 2-chloro-2-methylbutane, bromopropane, trichloroethylene, phenol, dioxane, trioxane, diethyl ether, propyl ether, isopropyl ether, methyl N-butyl ether, anisole, ethyl glycol ether, dichloroethylether, petroleum ether, methylfuran, tetrahydrofuran, morpholine, butyraldehyde, isobutyraldehyde, toluene, xylene, 1, 3-dioxolane, dioxane, ethyl formate, propyl formate, isopropyl formate, ethyl acetate, vinyl acetate, isopropyl acetate, butyl acetate, methyl propionate, dimethyl phthalate, γ-butyrolactone and ethyl lactate. The organic solvent is preferably at least one selected from the group consisting of acetone, methanol, ethanol, propanol, ethylene glycol, propylene glycol, glycerol, formamide, N,N-dimethylformamide, ethyl formamide, chloroform, dichloroethane, anisole, diethylenetriamine, triethylenetetramine, acetonitrile, tetrahydrofuran, dimethyl sulfoxide, ethyl acetate and butyl acetate. In the present disclosure, the organic solvent is capable of dissolving the soluble binding agent at ordinary temperature or under the heated conditions, such that the soluble binding agent is adsorbed in a small molecule chain state between the surfaces and particles of the other components contained in the mortar consolidation, constituting a binding network structure.

Some embodiments of the present disclosure provide that the hydraulic inorganic cementitious material is preferably cement, which may be a conventional choice in the art, further preferably at least one selected from the group consisting of general purpose Portland cement, limestone Portland cement, steel slag silicate cement, magnesium slag silicate cement, phosphorus slag silicate cement, white Portland cement, coloured Portland cement, calcium sulphoaluminate modified Portland cement, calcium sulphoaluminate cement, aluminate cement, iron aluminate cement, fluoroaluminate cement, phosphate cement, magnesium oxychloride cement, alunite cement and alkali-activated cement; more preferably at least one selected from the group consisting of general purpose Portland cement, sulphoaluminate cement, aluminate cement and iron aluminate cement.

In the present disclosure, the aggregate (also referred to as "skeletal material") is at least one selected from the group consisting of natural sand, machine-made sand and recycled aggregate. The natural sand includes river sand, mountainous sand, lake sand, and desalinated marine sand; the machine-made sand is the artificial sand manufactured through the sand manufacturing equipment using rock, tailings, industrial solid wastes as raw materials; the recycled aggregate refers to the granules meeting the requirements of fine aggregate for mortar, which is obtained from waste concrete and construction waste through processes such as crushing, washing and sorting. The density of the aggregate is more than 2,000 kg/m³.

According to some embodiments of the present disclosure, wherein the admixture may be a conventional choice in the art, preferably at least one selected from the group consisting of pulverized fuel ash, slag powder, silica fume, zeolite powder, desulfurized gypsum, limestone powder, steel slag powder, phosphorus powder; more preferably at least one selected from the group consisting of pulverized fuel ash, slag powder, desulfurized gypsum and limestone powder. The use of admixtures can reduce the product costs and, in certain formulation system, can produce synergistic effects with other components to improve mortar workability and physical mechanical properties after hardening.

Some embodiments of the present disclosure provide that the additive is at least one selected from the group consisting of a water-retaining agent, a redispersible latex powder, a water reducing agent, a retarder, a setting accelerator, a waterproof agent, a coupling agent, an early strength agent, an air entraining agent, a thixotropic lubricant, a defoaming agent and a dissolving agent.

Some embodiments of the present disclosure provide that the water-retaining agent is at least one selected from the group consisting of a methylcellulose, a carboxymethylcellulose, a carboxymethyl hydroxyethylcellulose, an ethylcellulose, a hydroxyethylcellulose, a sulfo-acid ethylcellulose, a carboxyethyl methylcellulose, a hydroxypropyl methylcellulose and a cyanoethylcellulose, preferably a methylcellulose and/or a hydroxypropyl methylcellulose. It is preferred that the water-retaining agent is added such that the re-dissolvable mortar consolidation provided by the present disclosure has a higher water retention rate upon contacting with water and dissolving, and avoids the quality problems such as workability degradation due to excessive water loss, and cracking after hardening. Wherein the water-retaining agent is contained in an amount of 0-3wt%o, preferably at 0.5-3wt%o.

Some embodiments of the present disclosure provide that the redispersible latex powder may be the conventional choice in the art, preferably at least one selected from the group consisting of ethylene-vinyl acetate copolymer, ethylene-chloroethylene-vinyl laurate terpolymer, vinyl acetate-ethylene-higher fatty acid vinyl ester terpolymer, vinyl acetate-higher fatty acid vinyl ester copolymer, acrylic ester-styrene copolymer, vinyl acetate-acrylic ester-higher fatty acid vinyl ester terpolymer, vinyl acetate homopolymer and styrene-butadiene copolymer, more preferably at least one selected from the group consisting of ethylene-vinyl acetate copolymer, ethylene-chloroethylene-vinyl laurate terpolymer, vinyl acetate-ethylene-higher fatty acid vinyl ester terpolymer and vinyl acetate-higher fatty acid vinyl ester copolymer. The redispersible latex powder in use can improve cohesive strength of the re-dissolvable mortar consolidation provided by the present disclosure, reduce water absorption, and improve crack resistance and flexibility. The redispersible latex powder is commercially available.

Some embodiments of the present disclosure provide wherein the water reducing agent is at least one selected from the group consisting of a lignin water reducing agent, a naphthalene-based water reducing agent, a melamine-based water reducing agent and a polycarboxylate water reducing agent, preferably a polycarboxylate water reducing agent, more preferably an acrylic-isobutylene-polyoxyethylene ether water reducing agent. When the re-dissolvable mortar consolidation provided by the present disclosure is used on site upon contacting with water, the water reducing agent can substantially reduce the required amount of water and increase the compression resistance and bonding strength after hardening of the mortar, and reduce the cracking resistance.

Some embodiments of the present disclosure provide that the retarder may be a routine choice in the field, preferably at least one selected from the group consisting of lignosulfonate, calcium saccharose, gluconate, citric acid, citrate, tartaric acid, tartrate, hydroxycarboxylate, zinc salt, borate and phosphate, more preferably at least one selected from the group consisting of lignosulfonate, calcium saccharose, gluconate, citric acid and tartaric acid. The addition of the retarder enables the re-dissolvable mortar consolidation procedure provided by the present disclosure, when in use, to prolong the setting and hardening time, maintain the plastic state for a longer period of time, and increase the workability time, according to the requirements for the construction.

According to some embodiments of the present disclosure, wherein the setting accelerator may be the conventional choice in the art, preferably a mixture of one or more selected from the group consisting of lithium carbonate, sodium carbonate, potassium carbonate, sodium hydroxide, potassium hydroxide, aluminum hydroxide, sodium silicate, potassium silicate, sodium aluminate, potassium aluminate, calcium aluminate and aluminum sulfate. The addition of the setting accelerator enables the re-dissolvable mortar consolidation provided by the present disclosure, when in use, to shorten the setting and hardening time and expediting the construction process according to the requirement of construction.

Some embodiments of the present disclosure provide that the waterproof agent may be a conventional choice in the art, preferably at least one selected from the group consisting of potassium stearate, sodium stearate, calcium chloride, ferric chloride and organosilicone, and more preferably organosilicone. The addition of the waterproof agent enables the re-dissolvable mortar consolidation of the present disclosure to exhibit desirable water repellency properties, and when applied to mortar construction where the water proof, impermeability and moisture resistance are required, it can meet the relevant requirements.

Some embodiments of the present disclosure provide that the coupling agent is at least one selected from the group consisting of a silane coupling agent, a titanic acid ester coupling agent, an aluminic acid ester coupling agent, a phosphate coupling agent, and a boric acid ester coupling agent, preferably a silane coupling agent, and more preferably at least one selected from the group consisting of vinyltriethoxysilane, vinyltrimethoxysilane, and vinyltris (β-methoxyethoxy) silane. The addition of the coupling agent enables the inorganic matrix and the organic matrix in the re-dissolvable mortar consolidation feed material provided by the present disclosure to bind more strongly, thereby increasing the strength and hardness of the mortar consolidation per se.

According to some embodiments of the present disclosure, wherein the early strength agent may be a convenient choice in the art, preferably at least one selected from the group consisting of sodium sulfate, potassium sulfate, sodium chloride, potassium chloride, calcium nitrate, calcium nitrite, calcium formate, calcium bromide, calcium chloride and triethanolamine, more preferably at least one of sodium sulfate, potassium sulfate, calcium chloride and triethanolamine. The addition of the early strength agent enables the re-dissolvable mortar consolidation provided by the present disclosure, upon contacting with water, to exhibit a higher hydration rate, and have a higher early strength upon hardening, and meet the concrete requirements for early strength of mortar in the special engineering.

In some embodiments of the present disclosure, the air entraining agent may be the conventional choice in the art, preferably at least one selected from the group consisting of sodium alkyl sulfonate, sodium alkyl benzene sulfonate, alkylphenol polyoxyethylene ether, fatty alcohol polyoxyethylene ether, sodium fatty alcohol polyoxyethylene sulfonate, sodium fatty alcohol sulfate and alkylphenol ethylene oxide condensate, more preferably sodium lauryl sulfonate, sodium dodecyl benzene sulfonate. The addition of the air entraining agent can introduce a large amount of fine air bubbles into the slurry obtained after the dissolution of the re-dissolvable mortar consolidation provided by the present disclosure, improve slurry workability and increase the anti-permeability and freeze resistance of the hardened mortar.

Some embodiments of the present disclosure provide that the thixotropic lubricant may be a conventional choice in the art, and preferably magnesium aluminum silicate. The addition of the thixotropic lubricant can significantly improve the sag resistance of the slurry obtained after dissolving of the re-dissolvable mortar consolidation provided in the present disclosure, and can stabilize and secure the mortar to the working surface during the course of facade construction such as wall plastering, wall brick consolidation.

According to some embodiments of the present disclosure, wherein the defoaming agent may be a conventional choice in the art, preferably an organosilicone defoaming agent and/or a polyether defoaming agent. The defoaming agent is commercially available, for example, polydimethylsiloxane defoaming agents, glycerophosphoethanolamine (GPE) defoaming agents, GPES defoaming agents. The addition of the defoaming agent is capable of reducing the excessive and unwanted bubbles in the slurry after dissolution of the re-dissolvable mortar consolidation provided by the present disclosure, promoting the hardened mortar to produce the desired compactness and mechanical strength.

Some embodiments of the present disclosure provide that the dissolving agent is at lest one selected from the group consisting of sodium carboxymethyl starch, hydroxypropyl cellulose, hydroxypropyl methyl cellulose, cross-linked polyvinylpyrrolidone and cross-linked sodium carboxymethyl cellulose or a mixture thereof. The addition of the dissolving agent enables the re-dissolvable mortar consolidation provided by the present disclosure to have a faster dispersion and dissolution rate due to the swelling effect upon contacting with water, and improve the construction efficiency

Some embodiments of the present disclosure provide that the fiber may be a routine selection in the art, preferably at least one selected from the group consisting of polypropylene fiber, polyacrylonitrile fiber, polyvinyl alcohol fiber, polyamide fiber, high density polyethylene fiber, polyester fiber, aramid fiber, elastane fiber, glass fiber, cellulose fiber, carbon fiber and steel fiber, more preferably at least one of polyamide fiber, polyester fiber and glass fiber. The addition of the fibers enables the formation of a three-dimensional network structure within the re-dissolvable mortar consolidation provided by the present disclosure, thereby providing the mortar consolidation with desirable flexural strength and resilience.

According to some embodiments of the present disclosure, wherein the length of the fiber can be selected according to the specifications of the re-dissolvable mortar consolidation provided by the present disclosure, preferably within a range of 1-12mm, more preferably 1.5-6mm.

Some embodiments of the present disclosure provide that the mortar consolidation having the above ingredients are capable of providing higher dissolution rate upon contacting with water, it is preferable that the dissolution time limit of the mortar consolidation is 20s or less, preferably 5-20s. It can facilitate quick construction on site, and improve construction efficiency

According to some embodiments of the present disclosure, when the mortar consolidation has the above ingredients, the overall strength of the mortar consolidation is improved to help ensure the integrity thereof during production, transportation and construction without crushing. Preferably, the strength of the mortar consolidation is 0.3 MPa or more, preferably 0.35-2 MPa.

Some embodiments of the present disclosure provide that where the mortar consolidation has the ingredients described above, the slurry obtained from the mortar consolidation upon contacting with water and dissolving, may exhibit the superior fluidity and cohesiveness. Preferably, the slurry obtained from the mortar consolidation upon contacting with water and dissolving may have a fluidity of 170-260mm, preferably 180-240mm.

According to some embodiments of the present disclosure, wherein the mortar consolidation has the above ingredients, the wet-state slurry is formed after the mortar consolidation is dissolved with water, and the mortar hardening body obtained after the mortar consolidation is hydrated and hardened after construction operation has a better mechanical strength. Preferably, the mortar hardening body obtained from the mortar consolidation after contacting with water and hardening has a 28-day compressive strength being 5 MPa or more, preferably 7.5 MPa or more, and the 14-day tensile adhesive strength (with the ordinary concrete base surface) being 0.4 MPa or more, preferably 0.6 MPa or more, more preferably 0.7 MPa or more.

Some embodiments of the present disclosure provide that the re-dissolvable mortar consolidation preferably comprise, the hydraulic inorganic cementitious material in an amount of 13-35wt%, the aggregate in an amount of 60-75wt%, the soluble binding agent in an amount of 0.4-1.2wt%, the admixture in an amount of 5-20wt%, the additive in an amount of 0.4-3wt% and the fiber in an amount of 0-1.5wt%, based on the total weight of the mortar consolidation.

Some embodiments of the present disclosure provide, most preferably, the re-dispersible mortar consolidation comprises: general purpose Portland cement in an amount of 15-35wt%, natural sand or machine-made sand in an amount of 65-75wt%, synthetic water-soluble polymer in an amount of 0.4-1.2wt%, pulverized fuel ash or desulfurized gypsum in an amount of 5-20wt%, redispersible latex flour in an amount of 0.2-3.5wt%, water retention agent in an amount of 0.05-0.4wt%, polyamide fiber or polyester fiber or glass fiber in an amount of 0-1.5wt%.

A second aspect of the present disclosure provides a method of preparing a re-dissolvable mortar consolidation comprising the following steps:
(1) blending a dry powder with an organic solvent to obtain a mixture; and
(2) subjecting the mixture to removal of the organic solvent and a molding process to prepare the mortar consolidation;
   wherein the dry powder comprises a hydraulic inorganic cementitious material, an aggregate, a soluble binding agent, and at least one optional additional component selected from the group consisting of an admixture, an additive and a fiber; the soluble binding agent is dissolved in the organic solvent and binds the hydraulic inorganic cementitious material, the aggregate and the additional component into a whole;
   the content of the soluble binding agent in the dry powder is greater than 0 wt% and no greater than 1.5 wt%, based on the total weight of the dry powder; the soluble binding agent is water-soluble; the organic solvent is at least one selected from the group consisting of ketones, alcohols, amines, amides, aliphatic hydrocarbon, aromatic hydrocarbon, halogenated hydrocarbon, nitriles, ethers, aldehydes, sulfones, phenols and esters.

The present disclosure may provide the solvent molding method to prepare the re-dissolvable mortar consolidation provided by the present disclosure. Some embodiments of the present disclosure provide that the dry powder preferably comprises the hydraulic inorganic cementitious material in an amount of 10-70 wt%, the aggregate in an amount of 15-88 wt%, the soluble binding agent in an amount of 0.2-10 wt%, the admixture in an amount of 0-40 wt%, the additive in an amount of 0-10 wt% and the fiber in an amount of 0-6 wt%, based on the total weight of the dry powder; it is more preferable that the dry powder comprises: the hydraulic inorganic cementitious material in an amount of 15-45 wt%, the aggregate in an amount of 45-75 wt%, the soluble binding agent in an amount of 0.4-1.2 wt%, the admixture in an amount of 5-30 wt%, the additive in an amount of 0.2-6 wt% and the fiber in an amount of 0-3 wt%, based on the total weight of the dry powder.

Some embodiments of the present disclosure provide that the mass ratio of the dry powder to the organic solvent is 100: (6-25), preferably 100: (8-20). The soluble binding agent is sufficiently dissolved in the organic solvent so as to ensure efficient dispersion between the other ingredients in the dry powder.

In some embodiments of the present disclosure, step (2) provides that the mixture simultaneously removes the organic solvent and performs molding, and the soluble binding agent binds the other ingredients of the dry powder into a whole. The mixture may be placed in a mold, the removal of the organic solvent is performed simultaneously with a pressing process, or a pressing process is performed for a time period and the pressure is then released, the organic solvent is subsequently removed. Preferably, the organic solvent is removed by ambient pressure drying, negative pressure drying, vacuum drying, microwave drying, infrared drying, and electromagnetic drying at a temperature of 30-100°C.

According to some embodiments of the present disclosure, it is preferable that the soluble binding agent is at least one selected from the group consisting of xanthan gum, acetate starch, starch ether and synthetic water-soluble polymer.

In the above method provided by the present disclosure, the various ingredients are used as previously mentioned, and the description is not repeated here.

A re-dissolvable mortar consolidation prepared with the method of the present disclosure is described. The ingredients and performance parameters of the mortar consolidation are as described above and will not be further described.

In a third aspect, the present disclosure provides a mortar sheet comprising a support and a re-dissolvable mortar consolidation provided by the present disclosure for packaging the support, wherein the support is at least one of a glass fiber mesh, a plastic mesh and a metal mesh.

In a fourth aspect, the present disclosure provides a method of using the mortar sheet of the present disclosure, comprising the following steps: adhering the re-dissolvable mortar consolidation on one side of the mortar sheet after spraying water and a wetting process to the working surface; subjecting the re-dissolvable mortar consolidation on the other side of the mortar sheet to spraying water and completely dissolving; pasting other material on a surface of the dissolved mortar consolidation, and subjected to hardening and cementing; wherein the other material is at least one selected from the group consisting of mortar, building block, brick, ceramic tile, dimension stone, slab, wallpaper, coating, a thermal insulation material or a waterproofing material.

In a fifth aspect, the present disclosure provides a mortar building material comprising a base material, and a re-dissolvable mortar consolidation of the present disclosure bonding with the base material, wherein the base material is at least one of the building block, brick, ceramic tile, dimension stone, slab, wallpaper, coating film, a thermal insulation material or a waterproofing material.

In a sixth aspect, the present disclosure provides a method of using the mortar building material provided by the present disclosure, comprising: spraying water and dissolving a re-dissolvable mortar consolidation contained in the mortar building material, and then directly adhering the mortar building material to a working surface and subjecting to a hardening process.

In a seventh aspect, the present disclosure provides a mortar particle granulated from the re-dissolvable mortar consolidation provided by the present disclosure, wherein the mortar particle has a shape of sphere, ellipsoid, cube, cylinder or cone, and the maximum geometrical diameter of the mortar particle is within a range of 1-100mm.

In an eighth aspect, the present disclosure provides a method of using the mortar particle provided by the present disclosure, comprising the following steps: dissolving the mortar particle in water to form a slurry, daubing the slurry on a working surface, hardening directly or after cementing with other material.

The implementation process and the produced favorable effects of the present disclosure will be specified below with reference to the specific examples, the contents serve to facilitate the readers to clearly understand the spiritual essence of the present disclosure, instead of imposing any limitation on the embodiment and protection scopes of the present disclosure, which is defined in the claims.

In the following examples, each of the materials is commercially available, and the composition of the prepared mortar consolidation is denoted with the percentage by weight based on the feeding amount of ingredients.

The breaking strength of the mortar consolidation prepared in each example was measured with reference to a sample size and test method of the compressive strength in the Industrial Standard JGJ/T70-2009 "Standard for test method of performance on building mortar" of China: during the molding process, the raw materials of the mortar consolidation and the organic solvent were blended and stirred according to the matching ratio, the mixture was placed in a mould and molded, and subjected to drying at 60°C for 24 hours, and then demolded, the strength was tested.

A method of measuring dissolution time limit was as follows:

750mL of water was placed in a 1,000mL beaker at a temperature of 20±5°C, the beaker was disposed in a magnetic stir bar, a square hole mesh sieve with a bore diameter of 5.5 mm was installed horizontally in the beaker at a scale mark of 500mL, the mesh sieve was tightly stuck with an inner wall of the beaker. The beaker was placed on a magnetic stirrer, and the rotational speed was set at 500 rpm. The sample to be tested was a cube having a side length of 30mm×30mm×5mm, which was dried at 60°C for 24 hours before testing. The sample was gently placed in the beaker and a stopwatch was started for timekeeping, the timekeeping was stopped when the slurry to be dissolved completely penetrated the mesh sieve (fiber, large particle aggregate may not pass through), the time recorded at this moment was exactly the dissolution time limit of the test sample, the dissolution time limit was denoted with seconds.

The fluidity of the slurry obtained from mortar consolidation upon contacting with water was determined according to the National Standard GB/T 2419-2005 "Test method for fluidity of cement mortar" of China. The weight ratio of the mortar consolidation to the mixed water was 1:0.26.

The compressive strength and the tensile adhesive strength of the hardened slurry obtained from the mortar consolidation upon contacting with water were measured as follows:
the 28-day compressive strength of the hardened slurry was measured according to the Industrial Standard JGJ/T70-2009 "Standard for test method of performance on building mortar" of China, and the 14-day tensile adhesive strength of the hardened slurry was determined according to the Industrial Standard JGJ/T70-2009 "Standard for test method of performance on building mortar" of China; during a process of measuring the 28-day compressive strength and the 14-day tensile adhesive strength of the hardened slurry, the mortar consolidation was blended with water in advance to dissolve the mortar consolidation into a slurry having a consistency of 85mm to 90 mm.

### Example 1

A dry powder was prepared by mixing 15 parts by weight of Portland cement, 75 parts by weight of river sand, 1.2 parts by weight of xanthan gum, 6.5 parts by weight of pulverized fuel ash, 1.5 parts by weight of polypropylene fiber (with a length of 6mm), 0.05 parts by weight of hydroxypropyl methylcellulose and 0.75 parts by weight of ethylene-vinyl acetate ester copolymer, the dry powder was further blended with 15 parts by weight of acetone to obtain a mixture;
the mixture was injected into a mold, and subjected to an ambient pressure drying at 40°C to a constant weight, and then demolded to obtain a mortar consolidation;
the breaking strength and the dissolution time limit of the mortar consolidation prepared with the above method, the slurry fluidity, the 28-day compressive strength and the 14-day tensile adhesive strength of the slurry after hardening were measured respectively, the measurement results were illustrated in Table 1.

### Example 2

A dry powder was prepared by mixing 28 parts by weight of Portland cement, 65 parts by weight of mountain sand, 0.4 parts by weight of polyethylene glycol, 5 parts by weight of pulverized fuel ash, 0.4 parts by weight of methylcellulose and 1.2 parts by weight of an acrylate-styrene copolymer, the dry powder was further blended with 16 parts by weight of ethanol to obtain a mixture;
the mixture was injected into a mold, and subjected to an ambient pressure drying at 60°C to a constant weight, and then demolded to obtain a mortar consolidation;
the breaking strength and the dissolution time limit of the mortar consolidation prepared with the above method, the slurry fluidity, the 28-day compressive strength and the 14-day tensile adhesive strength of the slurry after hardening were measured respectively, the measurement results were illustrated in Table 1.

### Example 3

A dry powder was prepared by mixing 20 parts by weight of sulphoaluminate cement, 70 parts by weight of iron tailings machine-made sand, 0.8 parts by weight of polymaleic anhydride, 8 parts by weight of desulfurized gypsum, 0.3 parts by weight of carboxymethylhydroxyethyl cellulose and 0.9 parts by weight of styrene-butadiene copolymer, the dry powder was further blended with 15 parts by weight of methanol to obtain a mixture;
the mixture was injected into a mold, and subjected to an ambient pressure drying at 45°C to a constant weight, and then demolded to obtain a mortar consolidation;
the breaking strength and the dissolution time limit of the mortar consolidation prepared with the above method, the slurry fluidity, the 28-day compressive strength and the 14-day tensile adhesive strength of the slurry after hardening were measured respectively, the measurement results were illustrated in Table 1.

### Example 4

A dry powder was prepared by mixing 55 parts by weight of Portland cement, 38 parts by weight of lake sand, 0.5 parts by weight of polydimethyldiallyl ammonium chloride, 4 parts by weight of silica fume, 0.9 parts by weight of glass fiber (with a length of 3mm), 0.04 parts by weight of methylcellulose, 0.8 parts by weight of acrylate-styrene copolymer, 0.2 parts by weight of citric acid, 0.3 parts by weight of potassium chloride, and 0.26 parts by weight of fatty alcohol polyoxyethylene ether, the dry powder was further blended with 18 parts by weight of dimethyl sulfoxide to obtain a mixture;
the mixture was injected into a mold, and subjected to a vacuum drying at 100°C to a constant weight, and then demolded to obtain a mortar consolidation;
the breaking strength and the dissolution time limit of the mortar consolidation prepared with the above method, the slurry fluidity, the 28-day compressive strength and the 14-day tensile adhesive strength of the slurry after hardening were measured respectively, the measurement results were illustrated in Table 1.

### Comparative example 1

A dry powder was prepared by mixing 77 parts by weight of Portland cement, 14 parts by weight of mountain sand, 6 parts by weight of polyethylene glycol, 2 parts by weight of spandex fiber (with a length of 1.5 mm), 0.1 parts by weight of methylcellulose, 0.6 parts by weight of acrylate-styrene copolymer and 0.3 parts by weight of magnesium aluminum silicate, the dry powder was further blended with 16 parts by weight of ethanol to obtain a mixture.

The mixture was injected into a mold, and subjected to an ambient pressure drying at 60°C to a constant weight, and then demolded to obtain a mortar consolidation.

The breaking strength and the dissolution time limit of the mortar consolidation prepared with the above method, the slurry fluidity, the 28-day compressive strength and the 14-day tensile adhesive strength of the slurry after hardening were measured respectively, the measurement results were illustrated in Table 1.

### Comparative example 2

The mixture of the Comparative example 2 was prepared according to the same ingredients and composition as those in Example 2, except that the hot-melt preparation process was adopted.

The dry powder was placed in a mould and heated to 120°C to melt the polyethylene glycol contained therein, and cooled after heat preservation for 30 minute till the hardening and molding of the dry powder; it was discovered that the materials were crunchy after cooling and cannot form a mortar hardening body with a certain mechanical strength.

### Comparative example 3

The mortar consolidation of the Comparative example 3 was prepared according to the same ingredients and composition as those in the Comparative example 2, except that the polyethylene glycol was 5 parts by weight, the other ingredients were in total of 95 parts by weight, and were adjusted according to the original proportion relationship, i.e., 26.7 parts by weight of Portland cement, 62 parts by weight of mountain sand, 4.8 parts by weight of pulverized fuel ash, 0.4 parts by weight of methyl cellulose, 1.1 parts by weight of an acrylate-styrene copolymer were mixed. A mortar consolidation was obtained.

The breaking strength and the dissolution time limit of the mortar consolidation prepared with the above method, the slurry fluidity, the 28-day compressive strength and the 14-day tensile adhesive strength of the slurry after hardening were measured respectively, the measurement results were illustrated in Table 1.

### Comparative example 4

The mortar consolidation of the Comparative example 4 was prepared according to the same ingredients and composition as those in the Comparative example 3, except that the mountainous sand was replaced with an equal volume of expanded perlite light aggregate, and a mortar consolidation was prepared according to the preparation method of the Comparative example 2.

The breaking strength and the dissolution time limit of the mortar consolidation prepared with the above method, the slurry fluidity, the 28-day compressive strength and the 14-day tensile adhesive strength of the slurry after hardening were measured respectively, the measurement results were illustrated in Table 1.

**Table 1**

| Examples | Breaking Strength/MPa | Dissolution time limit/s | Fluidity of dissolved mortar/mm | 28-day compressive strength of hardened mortar/MPa | 14-day tensile adhesive strength of hardened mortar/MPa |
|---|---|---|---|---|---|
| Example 1 | 0.45 | 18s | 215 | 7.5 | 0.73 |
| Example 2 | 0.36 | 12s | 192 | 9.1 | 0.82 |
| Example 3 | 0.39 | 15s | 203 | 9.3 | 0.76 |
| Example 4 | 0.28 | 20s | 180 | 6.5 | 0.61 |
| Comparative example 1 | 0.16 | 25s | 168 | 5.5 | 0.51 |
| Comparative example 2 | / | / | / | / | / |
| Comparative example 3 | 0.21 | 35s | 185 | 6.4 | 0.62 |
| Comparative example 4 | 0.30 | 36s | 145 | 4.3 | 0.38 |

As can be seen from comparisons of Examples 1, 2, 3, 4 and Comparative examples 1, 2, 3, 4, the re-dissolvable mortar consolidation provided by the present disclosure has the superior comprehensive performance than the products prepared with the "hot-melt process" of the prior art in terms of breaking strength, dissolution time duration, slurry fluidity, 28-day compressive strength and 14-day tensile adhesive strength of the slurry after hardening. The mortar consolidation can be prefabricated into sheets, blocks, bars, pellets and other shapes in the factory and quickly dissolve after spraying water on the construction site, thereby performing the cementitious function of conventional mortar. The re-dissolvable mortar consolidation provided by the present disclosure can not only significantly improve construction efficiency of projects, save labor cost, but also generate little fugitive dust and waste, thereby producing significant ecological and environmental protection benefits.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A re-dissolvable mortar consolidation comprising: a hydraulic inorganic cementitious material, an aggregate, a soluble binding agent, and at least one optional additional component selected from the group consisting of an admixture, an additive and a fiber; the soluble binding agent binds the hydraulic inorganic cementitious material, the aggregate and the additional component into a whole;
wherein the content of the soluble binding agent in the mortar consolidation is greater than 0 wt% and no greater than 1.5 wt%, based on the total weight of the mortar consolidation; the soluble binding agent is water-soluble and is soluble in at least one organic solvent selected from the group consisting of ketones, alcohols, amines, amides, aliphatic hydrocarbon, aromatic hydrocarbon, halogenated hydrocarbon, nitriles, ethers, aldehydes, sulfones, phenols and esters.

2. The mortar consolidation of claim 1, wherein the mortar consolidation comprises: the hydraulic inorganic cementitious material in an amount of 10-70 wt%, the aggregate in an amount of 15-88 wt%, the soluble binding agent in an amount of 0.2-1.5 wt%, the admixture in an amount of 0-40 wt%, the additive in an amount of 0-10 wt% and the fiber in an amount of 0-6 wt%, based on the total weight of the mortar consolidation; preferably, the mortar consolidation comprises: the hydraulic inorganic cementitious material in an amount of 15-45 wt%, the aggregate in an amount of 45-75 wt%, the soluble binding agent in an amount of 0.4-1.2 wt%, the admixture in an amount of 5-30 wt%, the additive in an amount of 0.2-6 wt% and the fiber in an amount of 0-3 wt%, based on the total weight of the mortar consolidation.

3. The mortar consolidation of claim 1 or 2, wherein the soluble binding agent is at least one selected from the group consisting of xanthan gum, acetate starch, starch ether and synthetic water-soluble polymer; preferably, the starch ether is at least one selected from the group consisting of hydroxymethyl starch, hydroxyethyl starch and hydroxypropyl starch; preferably, the synthetic water-soluble polymer is at least one selected from the group consisting of polyvinyl alcohol, polyethylene glycol, polyacrylamide, polyvinylformamide, polymaleic anhydride, polyethylene oxide, polyvinylpyrrolidone, polyacrylic acid (polyacrylate), polymethacrylic acid (polymethacrylate), polydimethyldiallyl ammonium chloride, polyvinyl alcohol-based copolymers, polyethylene glycol-based copolymers, acrylamide-based copolymers, vinyl formamide copolymers, maleic anhydride-based copolymers, N-vinylpyrrolidone-based copolymers, acrylic acid (acrylate)-based copolymers, methacrylic acid (methacrylate)-based copolymers and dimethyldiallylammonium chloride-based copolymers.

4. The mortar consolidation of any one of claims 1 to 3, wherein the organic solvent is at least one selected from the group consisting of acetone, butanone, pentanone, cyclohexanone, methyl cyclohexanone, 3-methyl-2-butanone, 2-pyrrolidone, N-methyl pyrrolidone, N-vinyl pyrrolidone, methanol, ethanol, propanol, isopropanol, butanol, isobutanol, tert-butanol, pentanol, cyclohexanol, methyl cyclohexanol, ethylene glycol, propylene glycol, glycerol, butanediol, diethylene glycol, diacetone alcohol, diethylene glycol, triethylene glycol, 1,6-hexanediol, poly(ethylene glycol)-400 (PEG-400), 2,2'-thiodiethanol, 2-amino-2-methyl propanol, dimethyl acetal, butylamine, isobutylamine, 2-butylamine, t-butylamine, cyclohexylamine, aniline, ethylene diamine, ethanolamine, diethanolamine, triethanolamine, aminoethylethanolamine, pyridine, formamide, N-methyl formamide, N,N-dimethyl formamide, N-diethyl formamide, diethylenetriamine, triethylenetetramine, tetraethylenepentamine, dimethyl sulfoxide, pentane, hexane, nitromethane, nitroethane, methylhydrazine, acetonitrile, methylene chloride, chloroform, carbon tetrachloride, dichloroethane, trichloroethane, chloropropane, chlorobutane, 1-chloro-2-methylpropane, 2-chloro-2-methylpropane, 2-chloro-2-methylbutane, bromopropane, trichloroethylene, phenol, dioxane, trioxane, diethyl ether, propyl ether, isopropyl ether, methyl N-butyl ether, anisole, ethyl glycol ether, dichloroethylether, petroleum ether, methylfuran, tetrahydrofuran, morpholine, butyraldehyde, isobutyraldehyde, toluene, xylene, 1, 3-dioxolane, dioxane, ethyl formate, propyl formate, isopropyl formate, ethyl acetate, vinyl acetate, isopropyl acetate, butyl acetate, methyl propionate, dimethyl phthalate, γ-butyrolactone and ethyl lactate.

5. The mortar consolidation of any one of claims 1 to 4, wherein the dissolution time limit of the mortar consolidation is 20s or less, preferably 5-20s;
preferably, the mortar consolidation has a breaking strength of 0.3MPa or more, preferably 0.3-2MPa;
preferably, the slurry formed from the mortar consolidation after dissolution with water has a fluidity of 170-260mm; preferably 180-240mm;
preferably, the mortar hardening body obtained from the mortar consolidation after dissolution with water and a hardening process has a 28-day compressive strength of 5MPa or more, preferably 7.5MPa or more, and a 14-day tensile adhesive strength of 0.4MPa or more, preferably 0.6MPa or more.

6. The mortar consolidation of any one of claims 1 to 5, wherein the mortar consolidation is prepared through a solvent molding process.

7. A method of preparing a re-dissolvable mortar consolidation comprises the following steps:
(1) blending a dry powder with an organic solvent to obtain a mixture; and
(2) subjecting the mixture to removal of the organic solvent and a molding process to prepare the mortar consolidation;
wherein the dry powder comprises a hydraulic inorganic cementitious material, an aggregate, a soluble binding agent, and at least one optional additional component selected from the group consisting of an admixture, an additive and a fiber; the soluble binding agent is dissolved in the organic solvent and binds the hydraulic inorganic cementitious material, the aggregate and the additional component into a whole;
the content of the soluble binding agent in the dry powder is greater than 0 wt% and no greater than 1.5 wt%, based on the total weight of the dry powder; the soluble binding agent is water-soluble; the organic solvent is at least one selected from the group consisting of ketones, alcohols, amines, amides, aliphatic hydrocarbon, aromatic hydrocarbon, halogenated hydrocarbon, nitriles, ethers, aldehydes, sulfones, phenols and esters.

8. The method of claim 7, wherein the dry powder comprises 10-70 wt% of the hydraulic inorganic cementitious material, 15-88 wt% of the aggregate, 0.2-1.5 wt% of the soluble binding agent, 0-40 wt% of the admixture, 0-10 wt% of the additive and 0-6 wt% of the fiber, based on the total weight of the dry powder;
preferably, the dry powder comprises 15-45 wt% of the hydraulic inorganic cementitious material, 45-75 wt% of the aggregate, 0.4-1.2 wt% of the soluble binding agent, 5-30 wt% of the admixture, 0.2-6 wt% of the additive and 0-3 wt% of the fiber.

9. The method of claim 7 or 8, wherein mass ratio of the dry powder relative to the organic solvent is 100: (6-25), preferably 100: (8-20); preferably, the soluble binding agent is at least one selected from the group consisting of xanthan gum, acetate starch, starch ether and synthetic water-soluble polymer.

10. A mortar sheet comprising a support and a re-dissolvable mortar consolidation of any one of claims 1-6 packaging the support, wherein the support is at least one of a glass fiber mesh, a plastic mesh and a metal mesh; the thickness of the mortar sheet is preferably 1-10 mm.

11. A method of using the mortar sheet of claim 10, comprising the following steps: adhering the re-dissolvable mortar consolidation on one side of the mortar sheet after spraying water and a wetting process to the working surface; subjecting the re-dissolvable mortar consolidation on the other side of the mortar sheet to spraying water and completely dissolving; pasting other material on a surface of the dissolved mortar consolidation, and subjected to hardening and cementing;
wherein the other material is at least one selected from the group consisting of mortar, building block, brick, ceramic tile, dimension stone, slab, wallpaper, coating, a thermal insulation material or a waterproofing material.

12. A mortar building material comprising a base material, and a re-dissolvable mortar consolidation of any one of claims 1-6 bonding with the base material, wherein the base material is at least one of building block, brick, ceramic tile, dimension stone, slab, wallpaper, coating film, a thermal insulation material or a waterproofing material.

13. A method of using the mortar building material of claim 12, comprising: spraying water and dissolving a re-dissolvable mortar consolidation contained in the mortar building material, and then directly adhering the mortar building material to a working surface and subjecting to a hardening process.

14. A mortar particle granulated from the re-dissolvable mortar consolidation of any one of claims 1 to 6, wherein the mortar particle has a shape of sphere, ellipsoid, cube, cylinder or cone, and the maximum geometrical diameter of the mortar particle is within a range of 1-100mm.

15. A method of using the mortar particle of claim 14, comprising the following steps: dissolving the mortar particle in water to form a slurry, daubing the slurry on a working surface, hardening directly or after cementing with other material.

## Patentansprüche

1. Wiederauflösbare Mörtelverfestigung, umfassend: ein hydraulisches anorganisches zementartiges Material, ein Aggregat, ein lösliches Bindemittel und wenigstens eine optionale zusätzliche Komponente ausgewählt aus der Gruppe bestehend aus einer Beimischung, einem Zusatzstoff und einer Faser; wobei das lösliche Bindemittel das hydraulische anorganische zementartige Material, das Aggregat und die zusätzliche Komponente zu einem Ganzen bindet;
wobei der Gehalt an dem löslichen Bindemittel in der Mörtelverfestigung größer als 0 Gew.-% und nicht größer als 1,5 Gew.-%, bezogen auf das Gesamtgewicht der Mörtelverfestigung, ist; das lösliche Bindemittel wasserlöslich ist und in wenigstens einem organischen Lösungsmittel ausgewählt aus der Gruppe bestehend aus Ketonen, Alkoholen, Aminen, Amiden, aliphatischem Kohlenwasserstoff, aromatischem Kohlenwasserstoff, halogeniertem Kohlenwasserstoff, Nitrilen, Ethern, Aldehyden, Sulfonen, Phenolen und Estern löslich ist.

2. Mörtelverfestigung gemäß Anspruch 1, wobei die Mörtelverfestigung umfasst: das hydraulische anorganische zementartige Material in einer Menge von 10-70 Gew.-%, das Aggregat in einer Menge von 15-88 Gew.-%, das lösliche Bindemittel in einer Menge von 0,2-1,5 Gew.-%, die Beimischung in einer Menge von 0-40 Gew.-%, den Zusatzstoff in einer Menge von 0-10 Gew.-% und die Faser in einer Menge von 0-6 Gew.-%, bezogen auf das Gesamtgewicht der Mörtelverfestigung;
wobei die Mörtelverfestigung vorzugsweise umfasst: das hydraulische anorganische zementartige Material in einer Menge von 15-45 Gew.-%, das Aggregat in einer Menge von 45-75 Gew.-%, das lösliche Bindemittel in einer Menge von 0,4-1,2 Gew.-%, die Beimischung in einer Menge von 5-30 Gew.-%, den Zusatzstoff in einer Menge von 0,2-6 Gew.-% und die Faser in einer Menge von 0-3 Gew.-%, bezogen auf das Gesamtgewicht der Mörtelverfestigung.

3. Mörtelverfestigung gemäß Anspruch 1 oder 2, wobei das lösliche Bindemittel wenigstens eines ausgewählt aus der Gruppe bestehend aus Xanthangummi, Acetatstärke, Stärkeether und synthetischem wasserlöslichem Polymer ist;
wobei der Stärkeether vorzugsweise wenigstens einer ausgewählt aus der Gruppe bestehend aus Hydroxymethylstärke, Hydroxyethylstärke und Hydroxypropylstärke ist,
wobei das synthetische wasserlösliche Polymer vorzugsweise wenigstens eines ausgewählt aus der Gruppe bestehend aus Polyvinylalkohol, Polyethylenglycol, Polyacrylamid, Polyvinylformamid, Polymaleinsäureanhydrid, Polyethylenoxid, Polyvinylpyrrolidon, Polyacrylsäure (Polyacrylat), Polymethacrylsäure (Polymethacrylat), Polydimethyldiallylammoniumchlorid, Copolymeren auf Polyvinylalkoholbasis, Copolymeren auf Polyethylenglycolbasis, Copolymeren auf Acrylamidbasis, Vinylformamid-Copolymeren, Copolymeren auf Maleinsäureanhydridbasis, Copolymeren auf N-Vinylpyrrolidonbasis, Copolymeren auf Acrylsäure(Acrylat)basis, Copolymeren auf Methacrylsäure(Methacrylat)basis und Copolymeren auf Dimethyldiallylammoniumchloridbasis ist.

4. Mörtelverfestigung gemäß einem der Ansprüche 1 bis 3, wobei das organische Lösungsmittel wenigstens eines ausgewählt aus der Gruppe bestehend aus Aceton, Butanon, Pentanon, Cyclohexanon, Methylcyclohexanon, 3-Methyl-2-butanon, 2-Pyrrolidon, N-Methylpyrrolidon, N-Vinylpyrrolidon, Methanol, Ethanol, Propanol, Isopropanol, Butanol, Isobutanol, tert-Butanol, Pentanol, Cyclohexanol, Methylcyclohexanol, Ethylenglycol, Propylenglycol, Glycerol, Butandiol, Diethylenglycol, Diacetonalkohol, Diethylenglycol, Triethylenglycol, 1,6-Hexandiol, Poly(ethylenglycol)-400 (PEG-400), 2,2'-Thiodiethanol, 2-Amino-2-methylpropanol, Dimethylacetal, Butylamin, Isobutylamin, 2-Butylamin, t-Butylamin, Cyclohexylamin, Anilin, Ethylendiamin, Ethanolamin, Diethanolamin, Triethanolamin, Aminoethylethanolamin, Pyridin, Formamid, N-Methylformamid, N,N-Dimethylformamid, N-Diethylformamid, Diethylentriamin, Triethylentetramin, Tetraethylenpentamin, Dimethylsulfoxid, Pentan, Hexan, Nitromethan, Nitroethan, Methylhydrazin, Acetonitril, Methylenchlorid, Chloroform, Tetrachlorkohlenstoff, Dichlorethan, Trichlorethan, Chlorpropan, Chlorbutan, 1-Chlor-2-methylpropan, 2-Chlor-2-methylpropan, 2-Chlor-2-methylbutan, Brompropan, Trichlorethylen, Phenol, Dioxan, Trioxan, Diethylether, Propylether, Isopropylether, Methyl-N-butylether, Anisol, Ethylglycolether, Dichlorethylether, Petroleumether, Methylfuran, Tetrahydrofuran, Morpholin, Butyraldehyd, Isobutyraldehyd, Toluol, Xylol, 1,3-Dioxolan, Dioxan, Ethylformiat, Propylformiat, Isopropylformiat, Ethylacetat, Vinylacetat, Isopropylacetat, Butylacetat, Methylpropionat, Dimethylphthalat, γ-Butyrolacton und Ethyllactat ist.

5. Mörtelverfestigung gemäß einem der Ansprüche 1 bis 4, wobei die Auflösungszeitgrenze der Mörtelverfestigung 20 s oder kleiner, vorzugsweise 5-20 s, beträgt;
wobei die Mörtelverfestigung vorzugsweise eine Bruchfestigkeit von 0,3 MPa oder mehr, vorzugsweise 0,3-2 MPa, aufweist;
wobei die aus der Mörtelverfestigung nach Auflösen mit Wasser gebildete Aufschlämmung vorzugsweise eine Fluidität von 170-260 mm, vorzugsweise 180-240 mm, aufweist;
wobei der aus der Mörtelverfestigung nach Auflösen mit Wasser und einem Härtungsverfahren erhaltene Mörtel-Härtungskörper vorzugsweise eine 28-Tage-Kompressionsfestigkeit von 5 MPa oder mehr, vorzugsweise 7,5 MPa oder mehr, und eine 14-Tage-Zughaftfestigkeit von 0,4 MPa oder mehr, vorzugsweise 0,6 MPa oder mehr, aufweist.

6. Mörtelverfestigung gemäß einem der Ansprüche 1 bis 5, wobei die Mörtelverfestigung durch ein Lösungsmittelformverfahren hergestellt ist.

7. Verfahren zur Herstellung einer wiederauflösbaren Mörtelverfestigung, umfassend die folgenden Schritte:
(1) Mischen eines Trockenpulvers mit einem organischen Lösungsmittel, um ein Gemisch zu erhalten; und
(2) Unterwerfen des Gemischs an Entfernen des organischen Lösungsmittels und an ein Formverfahren, um die Mörtelverfestigung herzustellen,
wobei das Trockenpulver ein hydraulisches anorganisches zementartiges Material, ein Aggregat, ein lösliches Bindemittel und wenigstens eine optionale zusätzliche Komponente ausgewählt aus der Gruppe bestehend aus einer Beimischung, einem Zusatzstoff und einer Faser umfasst; wobei das lösliche Bindemittel in dem organischen Lösungsmittel gelöst wird und das hydraulische anorganische zementartige Material, das Aggregat und die zusätzliche Komponente zu einem Ganzen bindet;
wobei der Gehalt an dem löslichen Bindemittel in dem Trockenpulver größer als 0 Gew.-% und nicht größer als 1,5 Gew.-%, bezogen auf das Gesamtgewicht des Trockenpulvers, ist; das lösliche Bindemittel wasserlöslich ist; das organische Lösungsmittel wenigstens eines ausgewählt aus der Gruppe bestehend aus Ketonen, Alkoholen, Aminen, Amiden, aliphatischem Kohlenwasserstoff, aromatischem Kohlenwasserstoff, halogeniertem Kohlenwasserstoff, Nitrilen, Ethern, Aldehyden, Sulfonen, Phenolen und Estern ist.

8. Verfahren gemäß Anspruch 7, wobei das Trockenpulver 10-70 Gew.-% an dem hydraulischen anorganischen zementartigen Material, 15-88 Gew.-% an dem Aggregat, 0,2-1,5 Gew.-% an dem löslichen Bindemittel, 0-40 Gew.-% an der Beimischung, 0-10 Gew.-% an dem Zusatzstoff und 0-6 Gew.-% an der Faser, bezogen auf das Gesamtgewicht des Trockenpulvers, umfasst;
wobei das Trockenpulver vorzugsweise 15-45 Gew.-% an dem hydraulischen anorganischen zementartigen Material, 45-75 Gew.-% an dem Aggregat, 0,4-1,2 Gew.-% an dem löslichen Bindemittel, 5-30 Gew.-% an der Beimischung, 0,2-6 Gew.-% an dem Zusatzstoff und 0-3 Gew.-% an der Faser umfasst.

9. Verfahren gemäß Anspruch 7 oder 8, wobei das Masseverhältnis des Trockenpulvers zu dem organischen Lösungsmittel 100:(6-25), vorzugsweise 100:(8-20), beträgt;
wobei das lösliche Bindemittel vorzugsweise wenigstens eines ausgewählt aus der Gruppe bestehend aus Xanthangummi, Acetatstärke, Stärkeether und synthetischem wasserlöslichem Polymer ist.

10. Mörtelplatte, umfassend einen Träger und eine wiederauflösbare Mörtelverfestigung gemäß einem der Ansprüche 1-6, die den Träger verpackt, wobei der Träger wenigstens eines von einem Glasfasernetz, einem Kunststoffnetz und einem Metallnetz ist; wobei die Dicke der Mörtelplatte vorzugsweise 1-10 mm beträgt.

11. Verfahren zur Verwendung der Mörtelplatte gemäß Anspruch 10, umfassend die folgenden Schritte: Anhaften der wiederauflösbaren Mörtelverfestigung an eine Seite der Mörtelplatte nach Sprühen von Wasser und einem Befeuchtungsverfahren auf der Arbeitsoberfläche; Unterwerfen der wiederauflösbaren Mörtelverfestigung auf der anderen Seite der Mörtelplatte an Sprühen von Wasser und vollständiges Auflösen; Einfügen von anderem Material auf eine Oberfläche der aufgelösten Mörtelverfestigung und Unterwerfen an Härten und Zementierung;
wobei das andere Material wenigstens eines ausgewählt aus der Gruppe bestehend aus Mörtel, Baustein, Ziegel, Keramikfliese, Werkstein, Platte, Tapete, Beschichtung, Wärmedämmmaterial und Dichtungsmaterial ist.

12. Mörtel-Baumaterial, umfassend ein Grundmaterial und eine wiederauflösbare Mörtelverfestigung gemäß einem der Ansprüche 1-6, das mit dem Grundmaterial bindet, wobei das Grundmaterial wenigstens eines von Baustein, Ziegel, Keramikfliese, Werkstein, Platte, Tapete, Beschichtungsfilm, Wärmedämmmaterial und Dichtungsmaterial ist.

13. Verfahren zur Verwendung des Mörtel-Baumaterials gemäß Anspruch 12, umfassend: Sprühen von Wasser und Auflösen einer wiederauflösbaren Mörtelverfestigung, die in dem Mörtel-Baumaterial enthalten ist, und dann direktes Anhaften des Mörtel-Baumaterials an eine Arbeitsoberfläche und Unterwerfen an ein Härtungsverfahren.

14. Mörtelpartikel, granuliert aus der wiederauflösbaren Mörtelverfestigung gemäß einem der Ansprüche 1-6, wobei das Mörtelpartikel die Form einer Kugel, eines Ellipsoids, Würfels, Zylinders oder Kegels aufweist und der größte geometrische Durchmesser des Mörtelpartikels in dem Bereich von 1-100 mm liegt.

15. Verfahren zur Verwendung des Mörtelpartikels gemäß Anspruch 14, umfassend die folgenden Schritte: Auflösen des Mörtelpartikels in Wasser, um eine Aufschlämmung zu bilden, Streichen der Aufschlämmung auf eine Arbeitsoberfläche, Härten direkt oder nach Zementierung mit einem anderen Material.

## Revendications

1. Mortier de consolidation redissoluble comprenant :
un matériau cimentaire inorganique hydraulique, un agrégat, un agent liant soluble, et au moins un composant supplémentaire facultatif choisi dans le groupe constitué d'un mélange, un additif et une fibre ; l'agent liant soluble lie le matériau cimentaire inorganique hydraulique, l'agrégat et le composant supplémentaire en un tout ;
dans lequel la teneur de l'agent liant soluble dans le mortier de consolidation est supérieure à 0 % en poids et non supérieure à 1,5 % en poids, sur la base du poids total du mortier de consolidation ; l'agent liant soluble est hydrosoluble et est soluble dans au moins un solvant organique choisi dans le groupe constitué de : cétones, alcools, amines, amides, un hydrocarbure aliphatique, un hydrocarbure aromatique, un hydrocarbure halogéné, nitriles, éthers, aldéhydes, sulfones, phénols et esters.

2. Mortier de consolidation selon la revendication 1, le mortier de consolidation comprenant : le matériau cimentaire inorganique hydraulique en une quantité de 10 à 70 % en poids, l'agrégat en une quantité de 15 à 88 % en poids, l'agent liant soluble en une quantité de 0,2 à 1,5 % en poids, le mélange en une quantité de 0 à 40 % en poids, l'additif en une quantité de 0 à 10 % en poids et la fibre en une quantité de 0 à 6 % en poids, sur la base du poids total du mortier de consolidation ;
de préférence, le mortier de consolidation comprend : le matériau cimentaire inorganique hydraulique en une quantité de 15 à 45 % en poids, l'agrégat en une quantité de 45 à 75 % en poids, l'agent liant soluble en une quantité de 0,4 à 1,2 % en poids, le mélange en une quantité de 5 à 30 % en poids, l'additif en une quantité de 0,2 à 6 % en poids et la fibre en une quantité de 0 à 3 % en poids, sur la base du poids total du mortier de consolidation.

3. Mortier de consolidation selon la revendication 1 ou 2, dans lequel l'agent liant soluble est au moins l'un choisi dans le groupe constitué de : la gomme xanthane, un acétate d'amidon, un éther d'amidon et un polymère hydrosoluble synthétique ;
de préférence, l'éther d'amidon est au moins l'un choisi dans le groupe constitué de l'hydroxyméthylamidon, l'hydroxyéthylamidon et l'hydroxypropylamidon ;
de préférence, le polymère hydrosoluble synthétique est au moins l'un choisi dans le groupe constitué de : l'alcool polyvinylique, le polyéthylène glycol, le polyacrylamide, le polyvinylformamide, l'anhydride polymaléique, le poly(oxyde d'éthylène), la polyvinylpyrrolidone, le poly(acide acrylique) (polyacrylate), le poly(acide méthacrylique) (polyméthacrylate), le poly(chlorure de diméthyldiallylammonium), des copolymères à base d'alcool polyvinylique, des copolymères à base polyéthylène glycol, des copolymères à base d'acrylamide, des copolymères de vinylformamide, des copolymères à base d'anhydride maléique, des copolymères à base de N-vinylpyrrolidone, des copolymères à base d'acide acrylique (acrylate), des copolymères à base d'acide méthacrylique (méthacrylate) et des copolymères à base de chlorure de diméthyldiallylammonium.

4. Mortier de consolidation selon l'une quelconque des revendications 1 à 3, dans lequel le solvant organique est au moins l'un choisi dans le groupe constitué de : acétone, butanone, pentanone, cyclohexanone, méthylcyclohexanone, 3-méthyl-2-butanone, 2-pyrrolidone, N-méthylpyrrolidone, N-vinylpyrrolidone, méthanol, éthanol, propanol, isopropanol, butanol, isobutanol, tert-butanol, pentanol, cyclohexanol, méthyle cyclohexanol, éthylène glycol, propylène glycol, glycérol, butanediol, diéthylène glycol, alcool diacétonique, diéthylène glycol, triéthylène glycol, 1,6-hexanediol, poly(éthylène glycol)-400 (PEG-400), 2,2'-thiodiéthanol, 2-amino-2-méthylpropanol, diméthylacétal, butylamine, isobutylamine, 2-butylamine, t-butylamine, cyclohexylamine, aniline, éthylènediamine, éthanolamine, diéthanolamine, triéthanolamine, aminoéthyléthanolamine, pyridine, formamide, N-méthylformamide, N,N-diméthylformamide, N-diéthylformamide, diéthylènetriamine, triéthylènetétramine, tétraéthylènepentamine, diméthylsulfoxyde, pentane, hexane, nitrométhane, nitroéthane, méthylhydrazine, acétonitrile, dichlorométhane, chloroforme, tétrachlorure de carbone, dichloroéthane, trichloroéthane, chloropropane, chlorobutane, 1-chloro-2-méthylpropane, 2-chloro-2-méthylpropane, 2-chloro-2-méthylbutane, bromopropane, trichloroéthylène, phénol, dioxane, trioxane, éther diéthylique, éther propylique, éther isopropylique, éther méthyl-N-butylique, anisole, éther éthylique de glycol, éther dichloroéthylique, éther de pétrole, méthylfurane, tétrahydrofurane, morpholine, butyraldéhyde, isobutyraldéhyde, toluène, xylène, 1,3-dioxolane, dioxane, formiate d'éthyle, formiate de propyle, formiate d'isopropyle, acétate d'éthyle, acétate de vinyle, acétate d'isopropyle, acétate de butyle, propionate de méthyle, phtalate de diméthyle, γ-butyrolactone et lactate d'éthyle.

5. Mortier de consolidation selon l'une quelconque des revendications 1 à 4, dans lequel la limite de temps de dissolution du mortier de consolidation est de 20 s ou moins, de préférence de 5 à 20 s ;
de préférence, le mortier de consolidation a une résistance à la rupture de 0,3 MPa ou plus, de préférence de 0,3 à 2 MPa ;
de préférence, la suspension concentrée formée à partir du mortier de consolidation après dissolution avec de l'eau a une fluidité de 170 à 260 mm ; de préférence de 180 à 240 mm ;
de préférence, le corps de durcissement de mortier obtenu à partir du mortier de consolidation après dissolution avec de l'eau et un processus de durcissement a une résistance à la compression à 28 jours de 5 MPa ou plus, de préférence 7,5 MPa ou plus, et une résistance d'adhésion à 14 jours de 0,4 MPa ou plus, de préférence 0,6 MPa ou plus.

6. Mortier de consolidation selon l'une quelconque des revendications 1 à 5, le mortier de consolidation étant préparé par un processus de moulage par solvant.

7. Procédé de préparation d'un mortier de consolidation redissoluble qui comprend les étapes suivantes :
(1) mélange d'une poudre sèche avec un solvant organique pour obtenir un mélange ; et
(2) soumission du mélange à l'élimination du solvant organique et à un processus de moulage pour préparer le mortier de consolidation ;
dans lequel la poudre sèche comprend un matériau cimentaire inorganique hydraulique, un agrégat, un agent liant soluble, et au moins un composant supplémentaire facultatif choisi dans le groupe constitué d'un mélange, un additif et une fibre ; l'agent liant soluble est dissous dans le solvant organique et lie le matériau cimentaire inorganique hydraulique, l'agrégat et le composant supplémentaire en un tout ;
la teneur de l'agent liant soluble dans la poudre sèche est supérieure à 0 % en poids et non supérieure à 1,5 % en poids, sur la base du poids total de la poudre sèche ; l'agent liant soluble est hydrosoluble ; le solvant organique est au moins l'un choisi dans le groupe constitué de : cétones, alcools, amines, amides, un hydrocarbure aliphatique, un hydrocarbure aromatique, un hydrocarbure halogéné, nitriles, éthers, aldéhydes, sulfones, phénols et esters.

8. Procédé selon la revendication 7, dans lequel la poudre sèche comprend 10 à 70 % en poids du matériau cimentaire inorganique hydraulique, 15 à 88 % en poids de l'agrégat, 0,2 à 1,5 % en poids de l'agent liant soluble, 0 à 40 % en poids du mélange, 0 à 10 % en poids de l'additif et 0 à 6 % en poids de la fibre, sur la base du poids total de la poudre sèche ;
de préférence, la poudre sèche comprend 15 à 45 % en poids du matériau cimentaire inorganique hydraulique, 45 à 75 % en poids de l'agrégat, 0,4 à 1,2 % en poids de l'agent liant soluble, 5 à 30 % en poids du mélange, 0,2 à 6 % en poids de l'additif et 0 à 3 % en poids de la fibre.

9. Procédé selon la revendication 7 ou 8, dans lequel le rapport en masse de la poudre sèche par rapport au solvant organique est 100:(6-25), de préférence 100:(8-20) ;
de préférence, l'agent liant soluble est au moins l'un choisi dans le groupe constitué de : la gomme xanthane, un acétate d'amidon, un éther d'amidon et un polymère hydrosoluble synthétique.

10. Feuille de mortier comprenant un support et un mortier de consolidation redissoluble selon l'une quelconque des revendications 1 à 6 entourant le support, dans laquelle le support est au moins l'un parmi une maille en fibre de verre, une maille en plastique et une maille métallique ; l'épaisseur de la feuille de mortier est de préférence de 1 à 10 mm.

11. Procédé d'utilisation de la feuille de mortier selon la revendication 10, comprenant les étapes suivantes :
adhésion du mortier de consolidation redissoluble sur un côté de la feuille de mortier après pulvérisation d'eau et un processus de mouillage sur la surface de travail ;
soumission du mortier de consolidation redissoluble sur l'autre côté de la feuille de mortier à une pulvérisation d'eau et dissolution complète ; encollage d'un autre matériau sur une surface du mortier de consolidation dissous, et soumis à un durcissement et une cimentation ;
dans lequel l'autre matériau est au moins l'un choisi dans le groupe constitué de : un mortier, un bloc de construction, une brique, un carreau de céramique, une pierre de taille, une dalle, un papier peint, un revêtement, un matériau d'isolation thermique ou un matériau d'étanchéité.

12. Matériau de construction de mortier comprenant un matériau de base, et un mortier de consolidation redissoluble selon l'une quelconque des revendications 1 à 6 se liant avec le matériau de base, dans lequel le matériau de base est au moins l'un parmi un bloc de construction, une brique, un carreau de céramique, une pierre de taille, une dalle, un papier peint, un film de revêtement, un matériau d'isolation thermique ou un matériau d'étanchéité.

13. Procédé d'utilisation du matériau de construction de mortier selon la revendication 12, comprenant : la pulvérisation d'eau et la dissolution d'un mortier de consolidation redissoluble contenu dans le matériau de construction de mortier, et directement après, l'adhésion du matériau de construction de mortier à une surface de travail et la soumission à un processus de durcissement.

14. Particule de mortier granulée à partir du mortier de consolidation redissoluble selon l'une quelconque des revendications 1 à 6, la particule de mortier ayant une forme de sphère, d'ellipsoïde, de cube, de cylindre ou de cône, et le diamètre géométrique maximal de la particule de mortier étant dans une plage de 1 à 100 mm.

15. Procédé d'utilisation de la particule de mortier selon la revendication 14, comprenant les étapes suivantes : dissolution de la particule de mortier dans de l'eau pour former une suspension concentrée, enduction de la suspension concentrée sur une surface de travail, durcissement directement ou après cimentation avec un autre matériau.
